# FASCICULE DE BREVET EUROPEEN

(11) **EP 1 335 820 B1**
(45) Date de publication et mention de la délivrance du brevet: **05.04.2006**
(21) Numéro de dépôt: 01993531.1
(22) Date de dépôt: 05.11.2001
(51) Int. Cl.: B28B 11/24, C04B 40/02, B65G 29/02

(54) **PROCEDE D'HYDRATATION DE PLAQUES DE PLATRE, DISPOSITIF POUR SA MISE EN OEUVRE**
VERFAHREN ZUM HYDRIEREN VON GIPSPLATTEN, EINRICHTUNG DAFÜR
METHOD FOR HYDRATING PLASTERBOARDS, DEVICE THEREFOR

(30) Priorité: 08.11.2000 EP 00403102
(43) Date de publication de la demande: 20.08.2003
(73) Titulaire: LAFARGE PLATRES, 84915 Avignon Cedex 9 (FR)
(72) Inventeur: FALINOWER, Charles, F-84200 Carpentras (FR)
(74) Mandataire: Hirsch & Associés
(86) Numéro de dépôt international: PCT/FR2001/003407
(87) Numéro de publication internationale: WO 2002/038348

(56) Documents cités:
- EP-A- 0 166 094
- EP-A- 0 999 152
- DE-A- 2 942 727
- DE-A- 2 950 661
- FR-A- 1 251 712

## Description

L'invention a pour objet un nouveau procédé de fabrication de plaques de plâtre, ainsi qu'un dispositif pour sa mise en oeuvre.

On connaît les plaques de plâtre, qui sont constituées d'un coeur de plâtre dense (densité par exemple 0.6 à 1.0, en général environ 0.7) sur au moins un support de type papier, et de préférence entre deux supports de type papier (et typiquement l'un étant dénommé papier crème et l'autre papier gris). Le procédé de fabrication classique de telles plaques de plâtre comprend les étapes suivantes. Typiquement, le procédé comprend le formage de la plaque, cette étape comprenant les sous-étapes de déroulement du papier crème, le mélange pour obtenir une pâte composée principalement de plâtre (semi-hydrate) et d'eau, auxquels sont ajoutés des additifs pour conférer à la plaque des' propriétés d'usage spécifiques (notamment de l'amidon et éventuellement un agent moussant est(sont) ajouté(s) pour former une mousse); le dépôt de la dite pâte sur le papier crème; le déroulement puis l'application du papier gris pour former en continu le sandwich précurseur de la plaque; l'hydratation, durcissement et cohésion de la pâte en cours d'hydratation avec les deux papiers sur des supports constituant la ligne de formage. En fin de la ligne de formage on est en présence d'un produit semi fini susceptible d'être découpé par une cisaille, puis manipulé éventuellement notamment avec une opération de retournement pour placer la face crème sur le dessus. Enfin ce produit est introduit dans un séchoir pour éliminer l'eau en excès de la plaque (opération dite de séchage de la plaque). A la sortie du séchoir, la plaque est soumise à l'état sec à différents traitements de conditionnement pour lui donner sa présentation finale.

Si chaque étape présente ses propres problèmes techniques, certaines étapes sont critiques, soit en terme de cinétique de réaction chimique, de cinématique ou de procédé qui vont influencer les caractéristiques et la qualité du produit final, soit en terme de complexité et de taille des appareillages et de difficulté de maintenance, ainsi que d'occupation de l'espace, soit plusieurs en combinaison. Les étapes qui sont les plus critiques, outre l'étape initiale de formage, sont les étapes d'hydratation-durcissement; transfert à l'état humide et séchage dans le séchoir pour éliminer l'excès d'eau libre. En fait, chaque étape majeure du procédé de fabrication de plaques de plâtre est critique pour le procédé et/ou le produit final. Un tel degré de criticité est particulier au procédé de fabrication de plaques de plâtre.

L'étape de début d'hydratation jusqu'à la cisaille dure classiquement quelques minutes, typiquement environ 3 à 4 minutes ou plus, l'étape suivante de transfert humide et de fin d'hydratation jusqu'à l'entrée séchoir dure de 5 à 10 minutes. Lorsqu'on souhaite augmenter la vitesse de ligne, pour atteindre des valeurs supérieures à 150 m/mn, avec des temps d'hydratation conventionnels, il est alors nécessaire d'augmenter la longueur de la ligne de formage jusqu'à des valeurs de plus de 500m, ce qui est très onéreux et pose de nombreux problèmes de cinématique de transfert et de positionnement des plaques sur les machines.

L'étape de transfert à l'état humide met en oeuvre des dispositifs complexes devant fonctionner en atmosphère chaude et humide. La productivité de la chaîne de production est donc tributaire de la fiabilité de ces dispositifs dont la maintenance est délicate et onéreuse.

EP-A- 0 166 094 décrit un procédé de fabrication de plaques de plâtre du type en ligne, comprenant un traitement sous pression dans une enceinte comprenant une atmosphère saturée en eau. Des plaques mises en forme sont chauffées dans l'enceinte sous pression par la vapeur saturée à une température de 120 à 160°C pendant une période prédéterminée. Les plaques sont alors refroidies à une température d'environ 100°C ou moins.

FR-A- 1 251 712 décrit un procédé et un dispositif de séchage et de durcissement d'une manière continue de panneaux de fibre de bois ou copeaux pressés et analogue. Les panneaux de bois humide ou non durcis sont introduits par une extrémité dans un tambour rotatif dans lequel sont établis des plateaux radiaux. Ces panneaux sont séchés sous un courant d'air chaud.

DE-A6 29 42 727 divulgue un appareil pour le séchage continu d'éléments en béton fraîchement préparés, en particulier des pierres de pavage de jardin. Un chemin de transport de panneau mène à un séchoir à air chaud en forme de tunnel. Le séchoir comprend une roue avec des poches rotatives autour d'un axe horizontal. Les poches sont ouvertes à la périphérie, si bien que les pierres de pavage de jardin peuvent être y être poussées et enlevées radialement.

Par ailleurs, ces dispositifs traditionnels engendrent par construction, des temps d'hydratation différents dans le sens longitudinal de la plaque d'une part et des décalages entre trains de plaques d'autre part avant l'entrée dans le séchoir dont il faut s'affranchir par des systèmes compliqués. Il est ensuite nécessaire de rattraper ces décalages pour obtenir un séchage homogène sur toute la surface des plaques et en particulier en bout de plaques. Le mécanisme doit assurer que les plaques ne se cassent pas à leurs extrémités et ne se chevauchent pas. Pour ce faire dans l'art antérieur, une mécanique très complexe et une régulation de vitesse de nombreux moteurs s'avèrent indispensables.

L'étape de séchage nécessite des dispositifs mécaniques devant fonctionner en milieu humide pouvant atteindre la saturation de la vapeur d'eau et pouvant atteindre plusieurs centaines de degré °C, ce qui pose derechef des problèmes de maintenance.

Enfin, l'étape de séchage est très consommatrice d'énergie et il serait avantageux de disposer d'un procédé et dispositif de séchage qui permette de ne fournir que la quantité nécessaire de calories vers les plaques.

Les autres étapes du procédé posent aussi d'autres problèmes, qu'il s'agit aussi de résoudre au mieux. Par exemple l'étape de cisaillement met en oeuvre une cisaille sous la forme de deux rouleaux équipés de lames qu'il faut nettoyer régulièrement. Ce dispositif est assez destructeur et mécaniquement rude vis-à-vis de la plaque (c'est aussi une des raisons qui rendent nécessaire un temps de durcissement relativement long car la plaque humide durcie -hydratée- doit pouvoir supporter les contraintes engendrées par la cisaille et les manutentions dans la zone de transfert humide).

L'étape de retournement ou du flipper est jusqu'à présent souvent nécessaire. Les bords amincis de la plaque sont formés grâce à un rouleau inférieur à bords épaissis ou une bande présentant la contre-forme; ceci implique que le papier crème soit dans la position inférieure. Or, lors du séchage ultérieur, il est préférable que cette face crème soit sur le dessus, afin d'éviter toute salissure provenant des rouleaux du séchoir. Il serait souhaitable de pouvoir éviter cette étape contraignante du flipper (tout en pouvant éventuellement garder si on le souhaite la configuration actuelle avec la pâte de plâtre qui est déposée sur le papier crème).

L'étape de transfert à l'état sec pose certes moins de problèmes qu'à l'état humide, mais il demeure compliqué et d'une maintenance toujours lourde.

L'invention a pour objet de fournir un procédé et un dispositif pour sa mise en oeuvre, qui permettent d'éviter les problèmes ci-dessus et offrir d'autres avantages encore en terme de procédé/qualité du produit final, de maintenance, de coût d'exploitation, d'investissement, et de condition de travail. L'invention repose en partie sur le principe que contrairement à l'art antérieur dans lequel les plaques se déplacent sur des grandes distances dans les divers équipements, dans l'invention les plaques sont pratiquement statiques; ce sont les équipements qui sont mobiles et généralement en rotation.

L'invention a, selon une première variante, pour objet un procédé de fabrication de plaques de plâtre comprenant les étapes suivantes:
(i) formage des plaques;
(ii) durcissement par hydratation des plaques jusqu'à obtention d'un produit hydraté à une teneur inférieure à 80% dans une zone linéaire de durcissement-hydratation partielle
(iii) poursuite de l'hydratation dans au moins un barillet tournant comprenant un axe central autour duquel est disposée une pluralité de branches, par rotation des plaques autour de l'axe central; et
(iv) séchage.

Selon un mode de réalisation, l'hydratation est poursuivie dans ledit au moins un barillet jusqu'à la totalité.

Selon un mode de réalisation, l'hydratation est poursuivie dans ledit au moins un barillet partiellement encore, et jusqu'à la totalité dans un second barillet.

Selon un mode de réalisation, le procédé comprend, entre les étapes (ii) et (iii), un étape intermédiaire de cisaillement.

Selon un mode de réalisation, cette étape de cisaillement est mise en oeuvre selon le principe du fil.

Selon un mode de réalisation, l'hydratation à l'issue de l'étape (ii) est inférieure à 66%.

Selon un mode de réalisation, l'hydratation à l'issue de l'étape (ii) est comprise entre 33 et 66%, de préférence entre 33 et 50%.

L'invention fournit encore un dispositif de fabrication de plaques de plâtre comprenant une zone linéaire de durcissement-hydratation partielle jusqu'à obtention d'un produit hydraté à une terreur inférieure à 80% et au moins un barillet comprenant un axe central 9 autour duquel est disposée une pluralité de branches 10a, 10b, 10c, 10d.

Selon un mode de réalisation, dans le barillet chaque branche est divisée en une pluralité de bras 11a, 11b, 11c, 11d, la surface occupée par les bras représentant de 50 à 99% de la surface de la branche correspondante.

Selon un mode de réalisation, le barillet comprend de 10 à 150, de préférence de 40 à 120, branches.

Selon un mode de réalisation, la zone durcissement-hydratation et le barillet sont selon deux axes parallèles.

Selon un mode de réalisation, la zone durcissement et le barillet sont accouplés par l'intermédiaire de rouleaux 8a, 8b et 8c, ces rouleaux interpénétrant les branches 10a, 10b, 10c, 10d.

Selon un mode de réalisation, le dispositif comprend un dispositif de cisaillement comprenant un fil.

L'invention fournit encore un barillet comprenant un axe central 9 autour duquel sont disposés une pluralité de branches 10a, 10b, 10c, 10d, chaque branche étant divisée en une pluralité de bras 11a, 11b, 11c, 11d, la surface occupée par les bras représentant de 50 à 99% de la surface de la branche correspondante.

Selon un mode de réalisation, le barillet comprend de 10 à 150, de préférence de 40 à 120, branches.

L'invention a, selon une seconde variante, pour objet un procédé de fabrication de plaques de plâtre comprenant les étapes suivantes:
(i) formage de la plaque;
(ii) durcissement de la plaque avec hydratation;
(iii) séchage au cours de la rotation de la plaque.

Selon un mode de réalisation, le séchage est mis en oeuvre dans au moins un barillet tournant dans une enceinte.

Selon un mode de réalisation, le séchage est mis en oeuvre dans au moins un barillet, ledit au moins un barillet comprenant une section de séchage unique.

Selon un mode de réalisation, le séchage est mis en oeuvre dans au moins un barillet, ledit au moins un barillet comprenant deux sections de séchage distinctes.

Selon un mode de réalisation, le séchage est mis en oeuvre dans au moins un barillet, ledit au moins un barillet comprenant trois ou plus sections de séchage distinctes.

Selon un mode de réalisation, le séchage est mis en oeuvre dans au moins deux barillets.

Selon un mode de réalisation, le séchage est mis en oeuvre dans au moins deux barillets, avec des sections de séchage distinctes d'un barillet à l'autre.

Selon un mode de réalisation, chaque barillet peut comprendre une, deux, trois ou plus sections de séchage distincte(s).

Selon un mode de réalisation avantageux, le séchage est mis en oeuvre dans au moins un barillet, ledit au moins un barillet présentant au moins deux zones de séchage distinctes; ce mode de réalisation couvre le cas où deux zones de séchage distinctes sont présentes dans un même barillet et celui où au moins deux barillets distincts comprennent au moins deux zones distinctes de séchage (au moins une zone par au moins un barillet).

Selon un mode de réalisation, le séchage est mis en oeuvre dans au moins un barillet, avec récupération de la chaleur latente de condensation de l'eau.

Selon un mode de réalisation, le séchage est mis en oeuvre dans au moins un premier barillet sans récupération et dans au moins un barillet avec récupération.

Selon un mode de réalisation, le procédé comprend en outre une étape:
(iv) refroidissement de la plaque.

Selon un mode de réalisation, le refroidissement est en partie mis en oeuvre dans une partie du dernier barillet.

L'invention fournit encore un dispositif de fabrication de plaque de plâtre comprenant une zone de durcissement et d'hydratation et un barillet comprenant un axe central 13 autour duquel sont disposés une pluralité de branches 14a, 14b, 14c, 14d, ledit barillet étant confiné dans une enceinte 15.

Selon un mode de réalisation, chaque branche est divisée en une pluralité de doigts de peigne.

Selon un mode de réalisation, l'enceinte représente une section de séchage unique.

Selon un mode de réalisation, l'enceinte est divisée en deux sections de séchage distinctes.

Selon un mode de réalisation, l'enceinte est divisée en trois ou plus sections de séchage distinctes.

Selon un mode de réalisation, l'axe central est un fût et les doigts sont creux, en relation avec ledit fût.

Selon un mode de réalisation, l'axe central est un fût et les doigts sont creux, en relation avec ledit fût, et percés de trous le long de ceux-ci.

Selon un mode de réalisation, le dispositif comprend au moins un barillet sans récupération et au moins un barillet récupération de la chaleur latente de condensation de l'eau.

Selon un mode de réalisation, le barillet présente une zone de refroidissement.

Selon un mode de réalisation, la zone de refroidissement correspond à un quartier du barillet situé sous l'horizontale médiane, l'enceinte étant éventuellement disposée au niveau cette zone.

Selon un mode de réalisation, la zone de refroidissement correspond à un quartier du barillet situé au-dessus de l'horizontale médiane, l'enceinte étant éventuellement disposée au niveau cette zone.

L'invention fournit encore un barillet comprenant un axe central 13 autour duquel sont disposés une pluralité de branches 14a, 14b, 14c, 14d, chaque branche étant divisée en une pluralité de doigts de peigne, ledit barillet étant confiné dans une enceinte 15.

Selon un mode de réalisation, l'enceinte représente une section de séchage unique.

Selon un mode de réalisation, l'enceinte est divisée en deux sections de séchage distinctes.

Selon un mode de réalisation, l'enceinte est divisée en trois ou plus sections de séchage distinctes.

Selon un mode de réalisation, l'axe central est un fût et les doigts sont creux, en relation avec ledit fût.

Selon un mode de réalisation, l'axe central est un fût et les doigts sont creux, en relation avec ledit fût, et sont percés de trous le long de ceux-ci.

Selon un mode de réalisation, le barillet présente une zone de refroidissement.

Selon un mode de réalisation, la zone de refroidissement correspond à un quartier du barillet situé sous l'horizontale médiane, l'enceinte étant éventuellement disposée au niveau cette zone.

Selon un mode de réalisation, la zone de refroidissement correspond à un quartier du barillet situé au-dessus de l'horizontale médiane, l'enceinte étant éventuellement disposée au niveau cette zone.

L'invention a, selon une troisième variante, pour objet un procédé de refroidissement de plaques de plâtre par rotation dans un barillet tournant, ce barillet comprenant un axe central 13 autour duquel sont disposés une pluralité de branches 14a, 14b, 14c, 14d.

Selon un mode de réalisation, le procédé est mis en oeuvre dans un barillet en contact avec l'air ambiant.

Selon un mode de réalisation, le procédé est mis en oeuvre dans un barillet confiné dans une enceinte.

Selon un mode de réalisation, le procédé est mis en oeuvre dans un quartier du barillet situé sous l'horizontale médiane, l'enceinte étant éventuellement disposée au niveau cette zone.

Selon un mode de réalisation, le procédé est mis en oeuvre dans un quartier du barillet situé au-dessus de l'horizontale médiane, l'enceinte étant éventuellement disposée au niveau cette zone.

L'invention a, selon une quatrième variante, pour objet un procédé de manutention de plaques de plâtre par rotation dans un barillet tournant, ce barillet comprenant un axe central 13 autour duquel sont disposés une pluralité de branches 14a, 14b, 14c, 14d.

Selon un mode de réalisation, le procédé est pour le retournement de plaques.

Selon un mode de réalisation, le procédé est pour le retournement alterné de plaques.

Selon un mode de réalisation, le procédé est pour l'appairage de plaques.

L'invention a, selon une cinquième variante, pour objet un procédé de séchage/cuisson/réaction d'objets plats au cours de la rotation dudit objet plat dans au moins un barillet tournant, ce barillet comprenant un axe central 13 autour duquel sont disposés une pluralité de branches 14a, 14b, 14c, 14d, ledit barillet étant confiné dans une enceinte 15.

Selon un mode de réalisation, chaque branche est divisée en une pluralité de doigts de peigne.

Selon un mode de réalisation, ledit au moins un barillet comprend une section de séchage unique.

Selon un mode de réalisation, ledit au moins un barillet comprend deux sections de séchage distinctes, correspondant à deux sections de l'enceinte.

Selon un mode de réalisation, ledit au moins un barillet comprend trois ou plus sections de séchage distinctes, correspondant à deux sections de l'enceinte.

Selon un mode de réalisation, le séchage est mis en oeuvre dans au moins deux barillets, avec des sections de séchage distinctes d'un barillet à l'autre.

Selon un mode de réalisation, le séchage est mis en oeuvre avec récupération de la chaleur latente de condensation de l'eau.

Selon un mode de réalisation, l'axe central est un fût et les doigts sont creux, en relation avec ledit fût.

Selon un mode de réalisation, l'axe central est un fût et les doigts sont creux, en relation avec ledit fût, et percés de trous le long de ceux-ci.

Selon un mode de réalisation, un refroidissement est mis en oeuvre dans une partie du dernier barillet.

Selon un mode de réalisation, la zone de refroidissement correspond à un quartier du barillet situé sous l'horizontale médiane, l'enceinte étant éventuellement disposée au niveau cette zone.

Selon un mode de réalisation, la zone de refroidissement correspond à un quartier du barillet situé au-dessus de l'horizontale médiane, l'enceinte étant éventuellement disposée au niveau cette zone.

Selon un mode de réalisation, l'objet plat est une plaque de bois, carreau de plâtre, plaque ou carreau d'argile, de ciment, ou autre.

Il est avantageux de combiner les variantes entre elles, particulièrement les première et seconde variantes entre elles, les seconde et troisième variantes entre elles, et les Première, seconde et troisième variantes entre elles.

L'invention est maintenant décrite plus en détails dans la description qui suit et en référence aux dessins annexés, dans lesquels:
la figure 1 représente une vue schématique d'une installation selon l'art antérieur;
la figure 2 représente un schéma général d'un dispositif selon l'invention;
la figure 3 représente un barillet tournant d'hydratation selon l'invention;
la figure 4 représente le barillet précédent, mais vu de dessus;
la figure 5 représente une variante du barillet d'hydratation selon l'invention;
les figures 6a et 6b représentent un barillet de séchage selon l'invention;
les figures 7a et 7b représentent un barillet de séchage selon l'invention, en éclaté et en vue de dessus;
les figures 8a et 8b représentent un barillet de séchage selon l'invention susceptible d'être utilisé en séchage indirect et/ou en récupérateur de chaleur;
la figure 9 représente un barillet de refroidissement selon l'invention;
la figure 10 représente un barillet de retournement selon l'invention;
la figure 11 représente une variante d'un procédé d'approvisionnement en plaques des barillets selon l'invention.

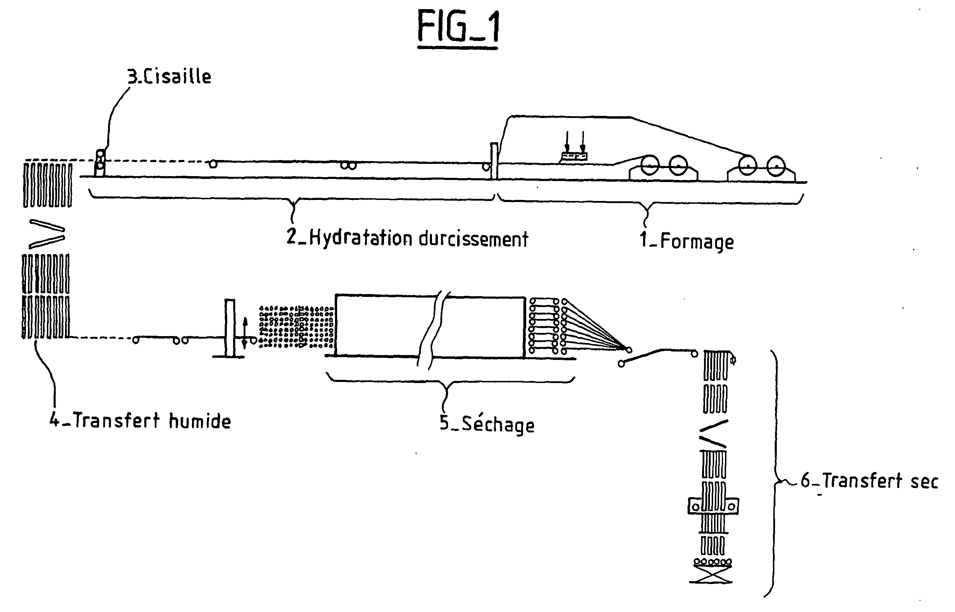

En référence à la figure 1, on décrit une installation classique de fabrication de plaques de plâtre. La zone 1 représente l'étape de formage de la plaque, cette étape comprenant les sous-étapes de déroulement du papier crème, mélange pour obtenir la pâte de plâtre, de dépôt de la pâte sur le papier crème et déroulement du papier gris pour former le sandwich précurseur de la plaque. La zone 2 représente l'étape de durcissement jusqu'à obtention d'un produit sensiblement hydraté. La zone 3 représente l'étape de cisaillement en plaques individuelles ou par train de plaques. La zone 4 représente l'étape de transfert humide (avec une opération de retournement pour placer la face crème sur le dessus à l'aide d'un dispositif dénommé "flipper" ainsi que l'opération de résorption du décalage entre trains de plaques avant l'entrée dans le séchoir). La zone 5 représente l'étape de séchage dans un séchoir pour éliminer l'eau en excès. La zone 6 représente l'étape de transfert à l'état sec (y compris un appairage éventuel des plaques face crème contre crème, resciage, banderollage et conditionnement).

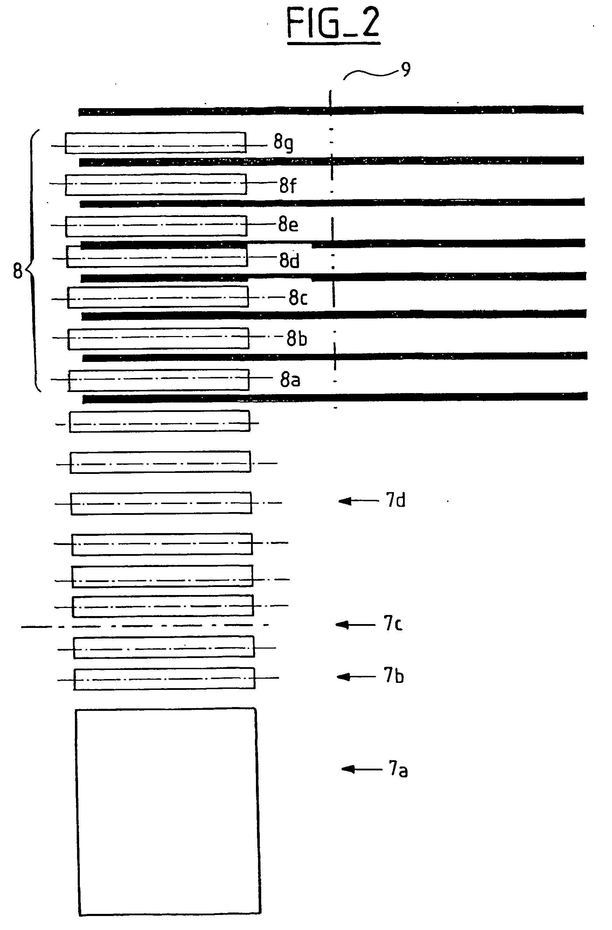

En référence à la figure 2, on décrit le schéma général d'un dispositif selon l'invention. Celui-ci comprend comme précédemment une zone de durcissement, au cours de laquelle a lieu le début de l'hydratation du plâtre. Cette hydratation n'est pas poursuivie complètement, mais seulement en général jusqu'à moins de 80%, de préférence à une valeur comprise par exemple entre 33% et 66%, plus préférentiellement inférieure à 50%. Le terme d'hydratation a le sens classique, à savoir la réaction de transformation de CaSO₄.0,5H₂O en CaSO₄.2H₂O. La mesure de l'hydratation se fait de façon classique, à savoir mesure sur une courbe, qui peut être la montée en température, le gain en poids (ou la prise d'eau), le durcissement, etc.. Toutes les méthodes classiques sont appropriées.

Cette zone de durcissement est représentée ici de façon schématique par la bande de formage 7a, les rouleaux avant cisaille 7b et la cisaille 7c elle-même, ainsi que la zone 7d. Cette zone 7d est une zone d'accélération 7d (afin de créer un espace entre les trains de plaques de façon classique). Cette zone est accouplée à une zone d'arrêt 8, qui va servir de dispositif d'introduction dans un barillet tournant équipé de bras. Cette zone d'arrêt comprend des rouleaux 8a, 8b, 8c, 8d, 8e, 8f, 8g, etc. Ces rouleaux sont typiquement régulièrement espacés, destinés (comme dans l'art antérieur) à recevoir les plaques humides, à la différence qu'ici les plaques sont moins hydratées donc moins dures. L'espacement des rouleaux sera déterminé pour éviter un fluage des plaques entre ces appuis, ce que l'homme de l'art peut aisément déterminer. Une fois sur ces rouleaux 8a, 8b, 8c, etc., la plaque est alors reprise par le barillet 9, objet de l'invention.

Il convient de noter ici que l'étape de cisaillement peut être mise en oeuvre dans un dispositif classique. Elle peut aussi être mise en oeuvre dans un dispositif plus adapté, du type "fil à couper le beurre". Ce fil peut être unique ou être double, par exemple comme sur des ciseaux. Dans la mesure où le degré d'hydratation est moindre lors de la découpe, la cisaille peut être beaucoup plus simple, et ne nécessite pas d'être "robuste". Un fil en métal, tendu en travers de la ligne, est suffisant. Il peut être incliné, par rapport au plan de la plaque et/ou à l'axe de la ligne. Sa manipulation est très simple, et la découpe est plus nette. Les inconvénients associés aux cisailles de l'art antérieur sont supprimés. Le nettoyage de ce fil est très simple; on peut par exemple monter le fil en boucle, et opérer une rotation entre chaque découpe. Lors des rotations, une brosse très simple nettoie le fil.

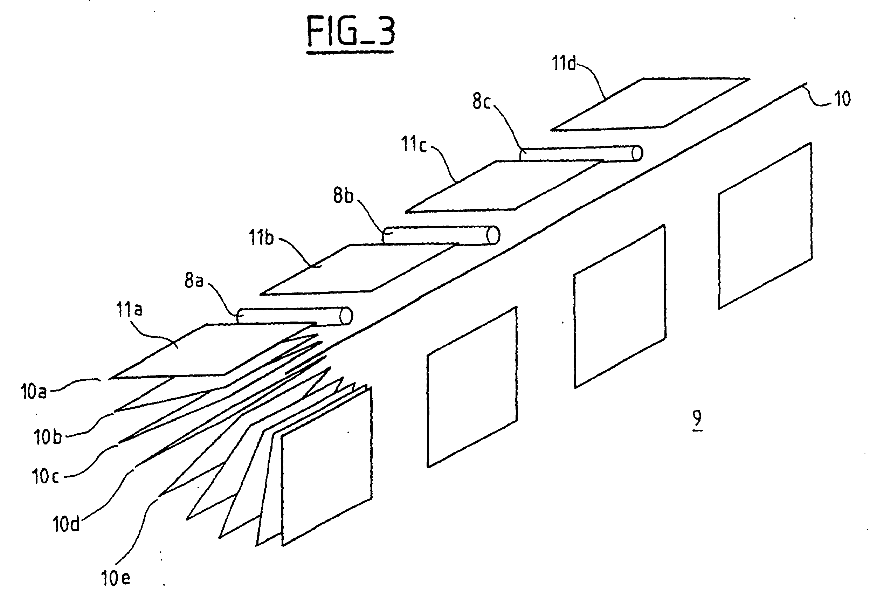

En référence à la figure 3, on décrit un barillet tournant selon l'invention, intercalé avec les rouleaux 8a, 8b, 8c décrits ci-dessus. Le terme de carrousel peut aussi être utilisé en lieu et place de barillet tournant. Le barillet est représenté avec seulement un quadrant des bras, afin de mieux représenter la coopération avec les rouleaux 8a, 8b, 8c. Le barillet 9 comprend un axe 10 (représentant en général un fût), sur lequel sont fixées des branches 10a, 10b, 10c, 10d, 10e, etc. (la liaison des branches sur l'axe central n'est pas représentée aux fins de lisibilité de la figure). Chaque branche comprend plusieurs bras 11a, 11b, 11c et 11d, par exemple, (de forme optimisée) et relativement larges pour obtenir un durcissement de la plaque sans l'apparition de fluage. Le nombre de bras par branche est déterminé par plusieurs facteurs, dont principalement la vitesse de la ligne, la longueur du barillet et le nombre de branches. Ce nombre est par exemple compris entre 3 et 60. Si on considère la surface d'une branche complète, les bras peuvent représenter, en général, de 50 à 99% de la surface de la branche correspondante. Les bras peuvent être pleins ou présenter des trous de façon à assurer à la fois le soutien de la plaque sans fluage et ne pas ralentir le phénomène d'évaporation de l'eau qui se produit à ce stade du procédé. Les dimensions du barillet sont en général les suivantes: diamètre de 3m à 6m, de préférence de 3,5 à 4m. Pour ce qui concerne la longueur, elle est très facilement ajustable aux besoins de production. Une augmentation de capacité se réalise par addition de bras supplémentaires. Typiquement la longueur du barillet peut être comprise entre 3m et 25m voire plus. Si on considère une plaque de plâtre P, celle-ci arrive sur les rouleaux 8a, 8b, 8c (sa course est maîtrisée par des dispositifs mécaniques et/ou électriques et électroniques). Dans ce cas, le barillet est dans une position telle que la plaque P peut passer entre les branches 10a et 10b. Le barillet, tourne, les bras entrent en contact avec la plaque humide P (qui n'a pas eu le temps de sensiblement fléchir) et désolidarisent la plaque P des rouleaux, la plaque P reposant alors sur les bras 11a, 11b, 11c et 11d de la branche 10b. Alors, les rouleaux redeviennent libres, de sorte à accepter une nouvelle plaque P'. Celle-ci se trouve cette fois au début entre les branches 10b et 10c, puis après une rotation du barillet en contact avec les bras de la branche 10c. Ainsi de suite, on peut "remplir" les branches du barillet. Le barillet comprend par exemple de 10 à 150 branches, de préférence de 40 à 120. La vitesse de rotation du barillet sera choisie notamment en fonction de la vitesse de la ligne, les dimensions et le nombre de branches du barillet et des paramètres procédé qui doivent conduire à une hydratation complète et une bonne planéité de la plaque à la sortie du barillet. En général, la vitesse de rotation du barillet est comprise entre 1t/h (tour/heure) et 6t/h, et de préférence entre 4 et 6 t/h dans le cas d'une installation avec un seul barillet d'hydratation.

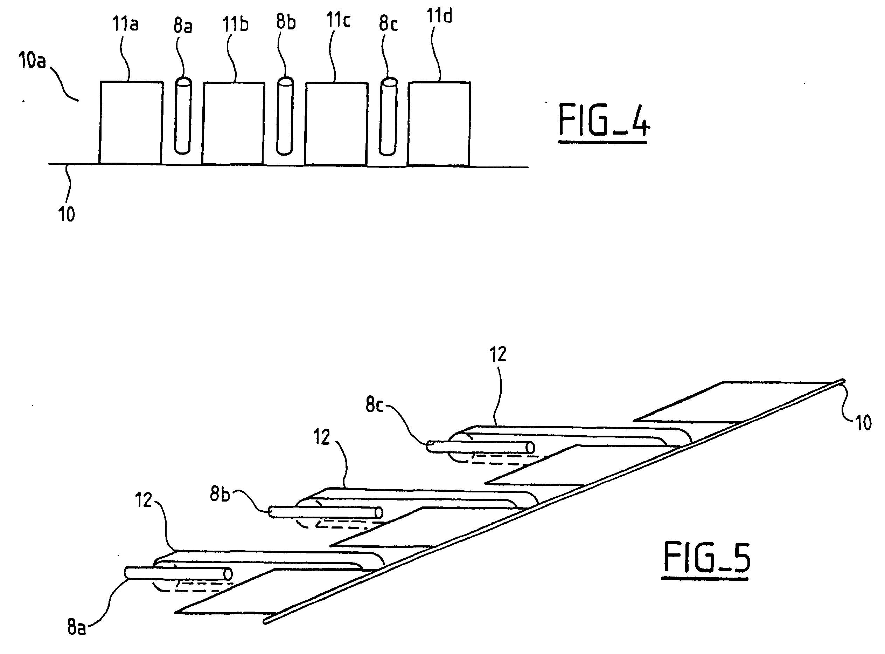

En référence à la figure 4, on décrit le mode de réalisation précédent vu de dessus (on ne représente qu'une branche, celle qui va venir soulever la plaque P).

En référence à la figure 5, on décrit une variante de la situation précédente. Cette fois, le barillet tournant 9 est décalé par rapport aux rouleaux 8a, 8b et 8c. Un transbordeur 12 assure la translation des plaques des rouleaux 8a, 8b et 8c vers le barillet 9. Ce transbordeur assure l'alimentation des plaques du train de plaques sur une branche du barillet. Ce transbordeur est classiquement un ensemble de supports solidarisés qui se déplacent selon un mouvement de translation, puis de retour en position par-dessous, à la manière d'un patin d'une chenille par exemple, associé à un mouvement de monte-et-baisse.

On pourrait aussi prévoir le barillet directement en fin de zone accélératrice/arrêt, mais cette fois avec un axe non plus parallèle mais perpendiculaire au sens de déplacement des plaques. Dans ce cas, l'axe des plaques est perpendiculaire à l'axe du barillet; celui-ci présente alors une longueur de l'ordre de la largeur de la plaque. La plaque vient alors, en fin de course, abuter sur le moyeu du barillet avant d'être manipulée par les branches du barillet.

L'hydratation dans le(s) barillet(s) tournant(s) permet un gain de place considérable. En effet, la section traditionnelle de durcissement peut être réduite, en longueur, jusqu'à 50%. De plus la zone transfert humide jusqu'à l'entrée du séchoir est elle aussi considérablement réduite. En outre, le temps de séjour de chaque plaque dans le barillet est identique, ce qui permet d'avoir un taux d'hydratation des plaques très homogène. Ceci est encore plus apparent lorsqu'un barillet de séchage est utilisé conjointement avec un barillet d'hydratation.

Les barillets selon l'invention peuvent accommoder des plaques de diverses longueurs, comme par exemple 1,50 m jusqu'à la longueur totale du barillet. En effet, les bras sont d'une largeur suffisante pour accommoder toutes les longueurs de plaques et tous les types de train de plaques de toutes longueurs: les plaques, quelque soit leur longueur, reposeront toujours suffisamment (en général majoritairement) sur les bras du barillet.

Pour décharger le barillet, on peut utiliser des systèmes similaires à ceux utilisés pour le charger dans la variante illustrée à la fig. 5, à savoir un transbordeur. Le transbordeur peut comprendre des rouleaux; il peut aussi comprendre une bande sans fin, placée entre les bras, l'axe de la bande étant perpendiculaire à l'axe du barillet. Dans un tel cas, la plaque arrivant sur la bande se pose dessus, les branches se dégagent naturellement. La vitesse de rotation de la bande est alors adaptée à celle du barillet pour pouvoir vider celui-ci. Tout autre système connu trouvera à s'appliquer à la manutention de plaque pour transférer celle-ci d'un barillet à l'autre.

On pourrait aussi avoir deux ou plusieurs barillets d'hydratation, si nécessaire. Le transport des plaques d'un barillet à l'autre se fait comme ci-dessus par exemple.

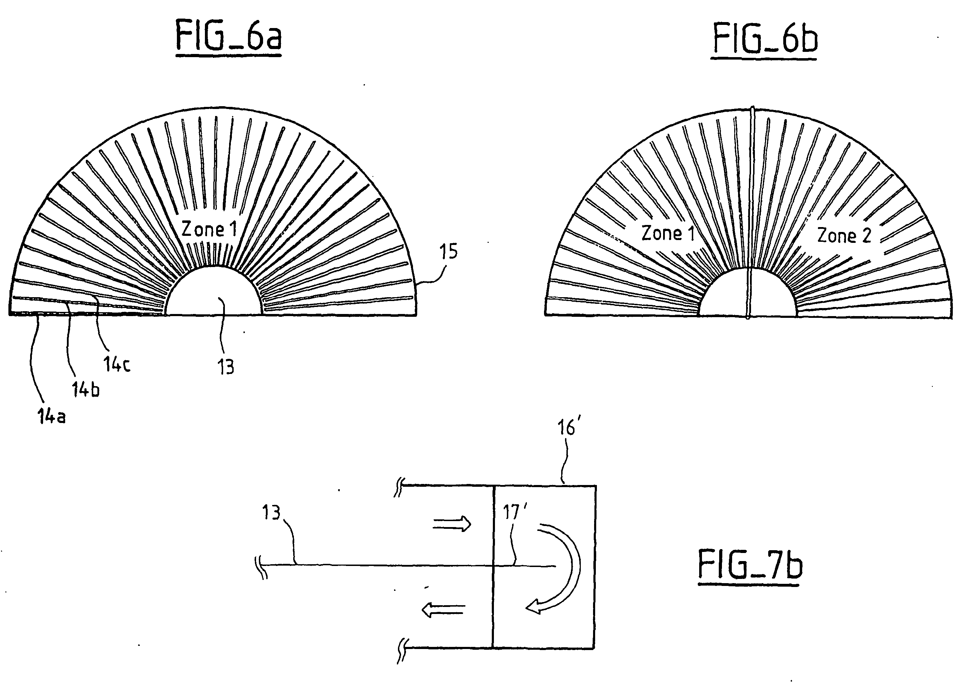

En référence aux figures 6a et 6b, on décrit un autre mode de réalisation de l'invention, à savoir un séchoir basé sur ce principe du barillet tournant. Il comprend un axe 13, et des branches 14a, 14b, 14c, etc., le tout étant placé dans une enceinte 15. (On n'a représenté qu'une demi-partie). Ce séchoir d'un nouveau type est alimenté à partir du transfert humide selon l'art antérieur ou à partir d'un barillet d'hydratation selon l'invention décrite ci-dessus.

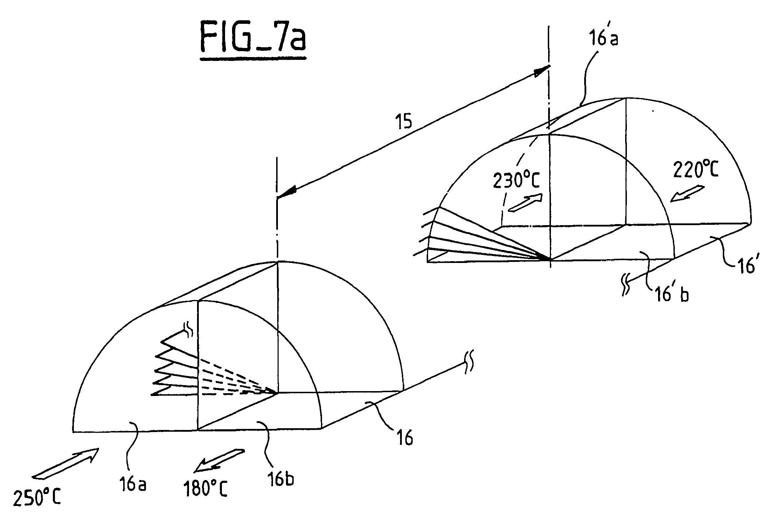

L'opération du séchoir est très simple. Les plaques rentrent dans le séchoir, sont placées sur les branches, et peuvent alors sous l'effet de la chaleur évacuer l'eau. L'enceinte 15 permet de confiner la zone ou section de séchage. Cette enceinte est en relation avec un circuit aéraulique, non représenté sur le schéma, qui comprend outre les conduits, un ou plusieurs générateurs de chaleur et des ventilateurs pour faire circuler les gaz chauds autour des plaques de plâtre à sécher. Par exemple, l'enceinte 15 peut être divisée en deux ou plusieurs sections, avec circulation d'air ou d'un autre gaz entre ces sections; ceci est décrit plus en détails ci-dessous. La figure 6a représente le cas avec une section de séchage unique tandis que la figure 6b représente le cas avec deux sections de séchage distinctes (températures différentes d'une section à l'autre). La circulation des gaz dans le barillet et l'enceinte sera décrite plus en détails à la figure 7.

Par rapport à l'art antérieur, ce type de séchoir permet d'avoir une meilleure homogénéité dans le séchage. En effet, dans l'art antérieur les plaques étaient introduites dans le sens longitudinal et lentement, ce qui occasionnait un décalage entre trains de plaques, donc un risque potentiel de calcination dit de bout de plaques. D'autre part les plaques dans un train de plaques ayant un taux d'hydratation différent, le séchage se trouvait affecté par cette hétérogénéité. Dans le nouveau procédé, les plaques sont introduites dans le sens transversal et rapidement, ce qui évite les inconvénients ci-dessus.

Chaque branche comprend de préférence (mais pas nécessairement) des doigts de peigne plutôt que des bras (par opposition au barillet d'hydratation), puisqu'il n'y plus de risque sérieux de fluage et pour permettre en outre un meilleur échange thermique. Il est cependant possible d'utiliser des bras, notamment percés d'une multitude de trous. Le doigt de peigne présente une section en contact avec la plaque de, par exemple, 0,5 à 10cm, notamment 1 à 8cm. Le barillet comprend par exemple de 20 à 150 branches, de préférence de 60 à 120. Les dimensions du barillet sont en général les suivantes: diamètre de 3 à 6m, de préférence de 3,5 à 4,5m et longueur de 3 à 25m, voire plus, de préférence de 6 à 15m. En général, on utilise deux ou plusieurs barillets de séchage. Ces barillets ont de préférence des sections de séchage distinctes (pour optimiser le processus de séchage par contrôle précis de la courbe de séchage -perte de poids en fonction du temps-).

La vitesse de rotation du barillet sera choisie en fonction du nombre de branches du barillet, du débit de la ligne, etc.. En général, la vitesse de rotation du barillet est comprise entre 1t/h et 6t/h, de préférence entre 2 et 4t/h.

Le barillet peut être partiellement ou dans son ensemble disposé dans l'enceinte chauffée, avec une atmosphère sensiblement homogène dans le barillet. On préférera cependant que les plaques forment les conduits d'acheminement des gaz, pour obtenir une circulation "intelligente" de ces gaz dans l'enceinte. Ceci permet d'avoir plusieurs sections de séchages avec des profils différents, et donc d'optimiser le séchage. Pour obtenir une bonne homogénéité du séchage dans le sens de la longueur des plaques, dans chaque section de séchage ainsi définie le flux de gaz chauds sera alternativement inversé. Cette opération se réalise simplement par exemple en inversant le sens de marche des ventilateurs ou en installant des déflecteurs appropriés aux extrémités de l'enceinte. Avec cette solution, chaque section comporte un nombre pair de conduits. On peut aussi installer des brûleurs par exemple aux deux extrémités de l'enceinte. Le circuit de circulation peut notamment être obtenu par un capotage approprié, l'enceinte 15 étant divisée au niveau des extrémités du barillet en autant de sections que souhaité.

En référence à la figure 7a, on décrit le barillet et on représente par des flèches le circuit des gaz chauds. L'enceinte est telle que les plaques jouent le rôle de déflecteurs et de guide pour les gaz chauds, parallèlement aux plaques. On peut ainsi obtenir, en modifiant les conditions opératoires, deux ou plusieurs sections de séchage avec des conditions distinctes. En fait, on peut avoir autant de sections de séchage qu'il y a d'alvéoles formées par deux plaques consécutives.

Plus spécifiquement, l'enceinte comprend à ses deux extrémités un capotage 16 et 16', qui est divisé en autant de sections qu'il y a de sections de séchage. Dans l'exemple représenté à la figure 7, il y a deux sections de séchage, et donc deux compartiments au niveau des capotages d'extrémité (16a et 16b, et 16'a et 16'b, respectivement). Les flèches indiquent le sens de circulation des gaz chauds.

Par exemple, on peut avoir deux sections de séchage, l'une avec une température d'entrée d'environ 250°C et une température de sortie d'environ 230°C, et une autre section avec une température d'entrée d'environ 220°C et une température de sortie d'environ 180°C. On peut alors appliquer une quantité de chaleur plus importante en étant sûr de ne pas "brûler" ou calciner les plaques.

Il est aussi possible et avantageux d'avoir une chicane au niveau des capotages; dans le cas présent, le capotage 16' comprendrait une chicane qui permet d'utiliser les gaz sortant de la première section à environ 230°C comme gaz entrant dans l'autre section à environ 220°C (voire à la même température). Ceci est plus apparent dans la figure 7b, vue de dessus en coupe, dans laquelle le capotage 16' comprend une chicane 17', autour de laquelle les gaz chauds circulent. La circulation des gaz est représentée par les flèches.

L'invention permet donc d'optimiser les zones de séchage, ce qui est très difficile, voire impossible, avec l'art antérieur. A ce stade, il est utile de rappeler que l'art du séchage reconnaît en général trois zones, zone 1, zone 2 et zone 3. Les zones 1 et 2 comprennent un séchage à température élevée des gaz (séchage fort) pour assurer la migration efficace de l'amidon vers le papier et évacuer env. 80% de l'eau.. La zone 3 est une zone dans laquelle le séchage est plus doux, afin d'éviter de dépasser la température de calcination des plaques. Dans cette zone, la vitesse de séchage est limitée par la diffusion de la vapeur dans le coeur de la plaque. De façon générale, les zones 1 et 2 ont une durée cumulée de 15 à 30 min (en général donc inférieure à 45 min) tandis que la zone 3 a une durée équivalente à celle des zones 1 et 2 cumulées. Les températures dans ces zones sont typiquement celles indiquées ci-dessus. Il est à noter aussi que l'invention permet d'obtenir, comme il est recherché dans l'art antérieur, un séchage à contre-courant ou à co-courant. L'invention permet donc l'obtention d'un profil de séchage particulièrement adapté et homogène.

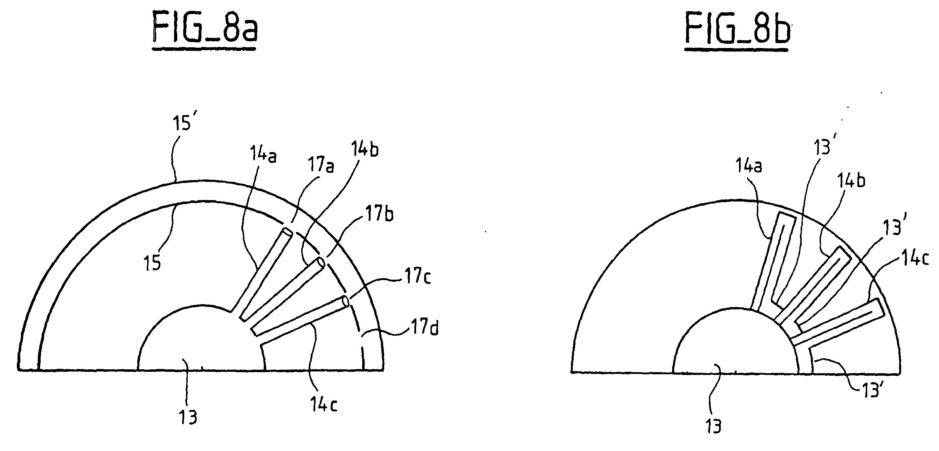

Il est possible d'imaginer un fût central, celui-ci étant divisé en zones (à la façon de quartiers d'orange), chaque zone étant alimentée en gaz chaud de façon indépendante, ce qui permet de recréer des zones de chauffage distinctes. Le chauffage des plaques se fait alors radialement, à partir du fût central, les gaz chauds étant distribués par des orifices disposés sur le fût central ou par les doigts du barillet (voir par exemple la figure 8a infra à laquelle ce mode de réalisation est applicable).

Il est possible et avantageux de placer plusieurs barillets en série. Les dispositifs de transport d'un barillet à l'autre ont été décrits plus haut en référence au barillet d'hydratation. Par exemple, on peut avoir un premier barillet, par exemple du type décrit plus haut avec deux sections de séchage, et un second barillet avec une troisième section de séchage. La troisième section de séchage présente par exemple une température d'entrée d'environ 150°C et une température de sortie d'environ 100°C. Les barillets en série peuvent très facilement être synchronisés.

La conception de ce séchoir autorise une grande flexibilité quant au type de procédé de séchage. Le séchoir décrit ci-dessus est de type séchoir direct. (gaz chauds en contact direct avec les plaques, avec un vecteur-vitesse des gaz parallèle aux plaques).

Une variante du séchage direct est aussi possible avec ce type de séchoir. Au lieu de faire circuler les gaz chauds entre les plaques comme indiqué dans le descriptif, les gaz sont introduits par le fût central puis dans les doigts percés (les doigts sont en général tels que la surface de contact avec la plaque est minimale tandis que les gaz s'échappent par des trous disposés le long des doigts). La forme des doigts est adaptée à ce type de séchage soit de forme arrondie pour éviter que les plaques obstruent les trous et le passage des gaz. Ce procédé de type séchage à jet présente l'avantage de présenter des coefficients d'échange meilleur, donc un rendement énergétique supérieur.

On peut aussi sécher les plaques de plâtre selon le procédé de séchage indirect à vapeur par exemple avec des modifications mineures sur le barillet. Le choix d'un séchage indirect permet d'utiliser d'autres combustibles meilleur marché que le gaz ou le fuel léger, telles que le charbon, le fuel lourd, des copeaux de bois ou toutes sortes de déchets susceptibles d'être brûlés dans une chaudière.

Dans cette configuration la vapeur est introduite dans l'axe central puis se distribue dans les doigts. La vapeur condensée par échange de chaleur avec les plaques est récupérée dans le fût ou la couronne puis reconduite vers la chaudière. Le barillet adapté à ce type de séchage indirect à la vapeur est relativement similaire à celui décrit en référence aux figures 8a et 8b ci-dessous.

En référence aux figures 8a et 8b, on décrit un autre mode de réalisation. L'axe central 13 devient un fût dans lequel on réintroduit les gaz chauds chargés en vapeur d'eau provenant en particulier des premières sections du séchoir ou des barillets précédents. Les branches 14a, 14b, 14c, sont constituées de doigts de peigne creux connectés au fût central. Les gaz chauds chargés en vapeur d'eau circulent alors dans ces doigts de peigne du centre vers l'extérieur, et éventuellement de l'extérieur vers le centre.

Dans la variante illustrée à la fig. 8a, les gaz sont collectés par l'enceinte extérieure à travers un orifice calibré, plusieurs orifices 17a, 17b, 17c, 17d, étant (équi)répartis sur la périphérie. L'enceinte extérieure est dans ce cas constituée d'une paroi double (15, 15') reliée à un ventilateur. Lorsque le barillet tourne, les extrémités des doigts étant creuses, elles viennent régulièrement en regard des orifices (équi)répartis. Un courant de gaz peut alors s'établir.

Dans la variante illustrée à la fig. 8b, les gaz effectuent un aller-retour dans les doigts, ceux-ci étant munis d'une chicane intérieure. Ils sont alors collectés dans une couronne 13' autour du fût central.

Ces gaz sont indirectement au contact avec les plaques posées sur les branches. Dans ces conditions l'eau vapeur va se condenser et céder au contact alors sa chaleur latente de condensation. L'eau condensée s'écoule le long des doigts de peigne et est recueillie dans le fût compartimenté ou la couronne, d'où elle est évacuée de préférence par gravité ou au moyen d'une pompe. De même l'eau condensée sur la double paroi de l'enceinte sera évacuée par gravité. On pourrait aussi prévoir de recueillir l'eau condensée dans le fût et l'écouler ensuite par les doigts de peigne en position basse. Cette technique peut aussi être implémentée selon l'enseignement du document DE-A-4326877. On peut ainsi récupérer les vapeurs d'eau chaude produites par ailleurs lors du séchage. En fait, les barillets peuvent recevoir tous les systèmes classiques de récupération d'énergie, opérant ainsi comme de véritables échangeurs de chaleur internés.

Les figures 8a et 8b représentent donc un barillet susceptible d'être utilisé en séchage indirect et/ou en récupérateur de chaleur, la différence principale entre ces deux modes étant la quantité de chaleur apportée par un ou plusieurs brûleur(s).

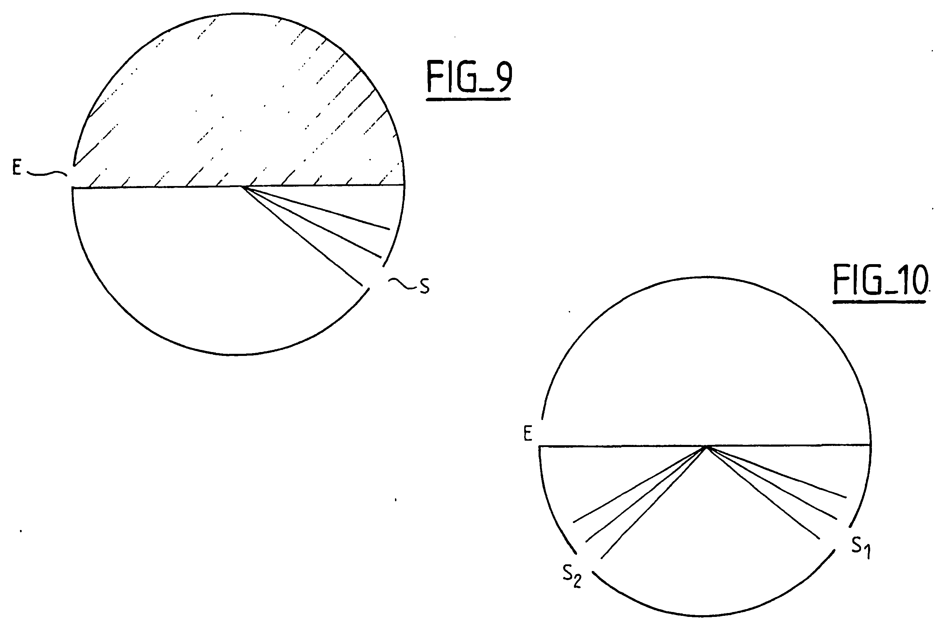

En référence à la figure 9, on décrit un barillet séchoir qui comporte en outre une fonction de refroidissement des plaques, avec toujours une zone d'introduction (E) des plaques, notamment à l'horizontale, et une sortie. La zone hachurée représente ici la section de séchage. Le barillet présente alors, au niveau de l'enceinte par exemple, un quartier supplémentaire. Par exemple la sortie (S) sous forme d'un jour sur l'extérieur n'est pas disposée horizontalement, mais vers le bas. Dans ce quartier supplémentaire, la plaque peut se refroidir naturellement ou pas, afin d'éviter les chocs thermiques éventuels. On obtient ainsi une plaque de meilleure qualité qu'avec un séchoir traditionnel. De plus, le jour étant décalé, la plaque glisse naturellement sur un tapis transporteur situé dessous.

On pourrait aussi avoir ce quartier au-dessus de l'horizontale, la plaque refroidie sortant alors à l'horizontale, par exemple sur une bande transbordeuse.

On pourrait aussi prévoir un (ou plusieurs) barillet complet aux fins de refroidissement si cela était nécessaire.

On obtient ainsi en sortie du dernier barillet une plaque refroidie qu'il est possible d'envoyer directement à la zone finale de conditionnement, sans passer par la série d'équipements lourds et bruyants qui se trouvent habituellement à la sortie séchoir, à savoir cascade de regroupement des plaques venant des différents étages, zones d'accélération et d'arrêt, tables de transfert etc.

Les barillets de séchage peuvent, comme pour le barillet d'hydratation, accepter différentes longueurs de plaques. Pour le barillet de séchage pour obtenir un meilleur cheminement encore des gaz dans les alvéoles on peut par exemple disposer les plaques en alternance, c'est-à-dire une plaque bord-à-bord d'un côté du barillet et l'autre bord-à-bord de l'autre côté. On peut également et de préférence utiliser des branches présentant à leurs extrémités (au niveau des disques latéraux du barillet) des segments ayant une surface suffisante pour que chaque plaque repose sur ce segment, quelque soit sa longueur, et/ou ayant une forme adaptée (par exemple sous forme de déflecteur) pour éviter la calcination en bout de plaque éventuelle susceptible d'avoir lieu à cause des gaz chauds ventilés.

L'utilisation de barillets, notamment au niveau du séchage, permet de mettre à l'extérieur de l'enceinte tous les organes d'entraînement, et donc de les protéger d'un environnement chaud et humide qui est agressif.

On notera qu'il est particulièrement avantageux de coupler au moins un barillet d'hydratation avec au moins un barillet de séchage. En particulier, on utilisera dans ce cas deux ou trois barillets de séchage, de préférence le premier (et le second) avec une ou deux sections de séchage distinctes et le dernier de préférence avec récupération de chaleur. On peut aussi dans le cas présent utiliser un séchage de type indirect.

De façon incidente, le barillet est aussi utile pour procéder à une manutention de la plaque dans des conditions douces.

La figure 10 représente un barillet utilisé pour un retournement de plaque, toujours dans des conditions douces, en s'affranchissant donc du flipper de retournement traditionnellement utilisé. Le retournement peut s'appliquer à toutes les plaques, et peut être alterné; une plaque peut être extraite juste sous l'horizontale et une autre environ 180° après, toujours sous l'horizontale. On peut donc avoir un retournement alterné des plaques, ce qui peut être utile pour conditionner des plaques face crème contre face crème.

Dans le mode de réalisation représente à la figure 10, on a une entrée (E) comme pour la figure 9, et deux sorties (S1) et (S2). Il est possible d'extraire toutes les plaques au niveau de la sortie (S1), mais aussi alternativement au niveau de (S1) et (S2), ce qui conduit à des plaques déjà alternées (ce qui facilite par exemple le transfert sec pour l'appairage face crème/face crème). Lorsque les plaques sont manutentionnées dans la partie haute des barillets, elles reposent en partie sur le moyeu ou fût central. Lorsque les plaques sont manutentionnées dans la partie basse des barillets (notamment entre les sorties (S1) et (S2)), elle peuvent glisser sur l'enceinte ou tout autre garde-corps approprié ou encore être accompagnées dans leur mouvement par une bande dont la vitesse linéaire correspond à la vitesse de la plaque considérée au niveau de la circonférence du barillet. (les bandes auront de préférence une trajectoire selon cette circonférence).

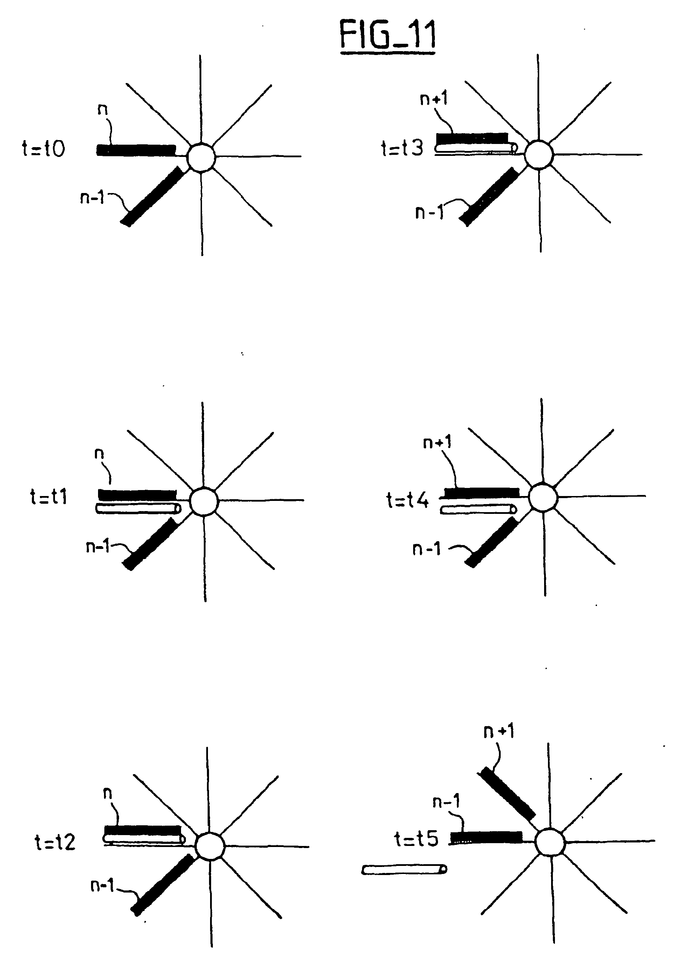

En référence à la figure 11, celle-ci décrit un mode de réalisation dans lequel les plaques sont approvisionnées dans les barillets (hydratation, séchage, refroidissement, manutention). Selon ce mode de réalisation, les plaques sont approvisionnées selon l'axe des barillets, le sens d'avancement se faisant selon la même ligne (à la différence des modes de réalisation précédents, dans lesquels l'approvisionnement s'opérait par translation une fois la plaque amenée sur le côté des barillets. Schématiquement, la séquence est la suivante. La description est faite avec une plaque, à des fins de commodité, mais le mode de réalisation est applicable à un train de plaques de la même façon; la description est faite en coupe, les plaques arrivant selon la direction perpendiculaire à la feuille. A l'instant t=0, le barillet est en position initiale; la plaque n est posée sur un bras ou une branche du barillet. A t=t1, un mécanisme formé d'un ensemble de rouleaux (par exemple) se déplace sous la plaque n (par exemple par translation) -il n'est représenté qu'un rouleau sur la figure, les autres étant en fait cachés compte tenu du mode de représentation choisi. A t=t2, ce mécanisme se soulève, les rouleaux s'intercalant entre les bras ou branches du barillet, ce qui a pour effet que la plaque n ne repose plus sur les bras ou branches du barillet. A t=t₃, la plaque n+1 venant selon l'axe du barillet vient remplacer la plaque n en la poussant ou au moyen des rouleaux motorisés, les plaques n et n+1 se déplaçant sur les rouleaux. A t=t₄, le mécanisme se rabaisse, ce qui a pour effet que la plaque n+1 repose sur les bras ou branches du barillet. A t=t5, le mécanisme se rétracte sur le côté du barillet, permettant ainsi à celui-ci de tourner de l'angle recherché pour amener la plaque n-1 en position de départ du procédé selon le mode de réalisation spécifique.

On peut de cette façon (ainsi que selon d'autres modes de réalisation) utiliser la totalité du barillet, savoir 360°C, pour effectuer les opérations requises (hydratation, séchage, refroidissement, manutention). Lors de la partie de la rotation dans la partie inférieure du barillet, les plaques peuvent par exemples être maintenues par des retours au niveau des bras ou branches, ou simplement être guidées par un capotage extérieur ou encore être guidées sur une chenille disposée sur la partie inférieure, cette chenille accompagnant le mouvement des plaques.

Dans ce mode de réalisation dit "à 360°", les données précédemment indiquées relativement au temps de séjour, vitesse de rotation, etc. doivent être adaptées (par exemple pour un temps de séjour identique, la vitesse de rotation peut être divisée par deux dans la mesure où on utilise effectivement les 360° du barillet et non plus 180°C seulement). De même, pour le séchage, les zones 1, 2 et 3 peuvent être regroupées dans un seul barillet, si on le souhaite.

Enfin, on notera que l'invention a vocation à s'appliquer de façon générale:
- dans le cas des plaques de plâtre à toute opération de manutention de plaque, y compris retournement.
- dans le cas du séchage, à tout type d'objet plat, notamment mais non limitativement carreau de plâtre , tuile (par exemple en ciment ou en argile), etc ou objet pour lequel il y a une réaction d'un liant hydraulique. Dans ce dernier cas, "séchage" doit s'entendre en fait comme couvrant toute réaction susceptible de conduire notamment à un durcissement, comme une cuisson. Il n'y a pas nécessairement évacuation d'eau, mais il peut y avoir un autre type de réaction avec libération d'autres effluents gazeux, ou non. Par exemple, on vise l'étuvage dans le cas des plaques ciment. Il est à noter que dans ces cas d'étuvage, il y a toujours le souci d'avoir dans la plupart des cas au moins deux périodes ou phases de "séchage". En effet, il est reconnu que pour le durcissement de ces plaques plusieurs étapes sont utilisées, parmi lesquelles: étape (1): une étape de repos pour permettre le début de la prise avant application de la chaleur;étape (2): une étape de chauffe avec une pente relativement douce jusqu'à la témpérature maximale avec éventuellement apport d'humidité; étape (3): une étape palier afin d'assurer l'homogénéité du chauffage et de la température des pièces dans la chambre; étape (4): ventilation avec de l'air chaud puis ambiant pour déshumidifier la chambre avant déchargement. L'invention permet d'obtenir un profil spécifique lors de l'étuvage. L'invention permet en outre d'obtenir des chambres dites "FIFO" (First In, First Out) qui soient sures et ne présentent pas de risque d'interruption de procédé.

L'invention vise aussi toutes les combinaisons entre un ou plusieurs barillets d'hydratation, et un ou plusieurs barillets de séchage (avec une ou plusieurs sections de séchage, avec ou sans récupérateur de chaleur), un ou plusieurs barillets de refroidissement, un ou plusieurs barillets de manutention, sont possibles. Le nombre de barillets et/ou le nombre de sections ne sont en aucun limitatifs de la présente invention. Par exemple, on peut avoir un seul barillet d'hydratation, comme on peut en avoir deux ou plus. On peut avoir un (ou plusieurs) barillet(s) d'hydratation associé(s) avec un (ou plusieurs) barillet(s) de séchage, et/ou de refroidissement et/ou de manutention; on peut aussi n'avoir que des barillets de séchage; on peut aussi associer ceux-ci avec des barillets de refroidissement et/ou de manutention. On peut avoir un seul barillet de séchage, comme on peut en avoir deux, trois ou plus. Chaque barillet peut ne comprendre qu'une section de séchage, mais il peut aussi en comprendre deux, trois ou plus. Chaque barillet peut être avec un chauffage du type direct ou indirect. Un ou plusieurs barillets peuvent être du type récupérateur de chaleur. On peut combiner tous ces types (fonction/constitution) de barillets ensemble; toutes les combinaisons sont permises. L'invention s'applique en particulier au cas de l'association barillet(s) d'hydratation suivi(s) de barillet(s) de séchage, tous les modes de réalisation comme rappelé ci-dessus étant susceptibles d'être combinés.

Les avantages procurés par l'invention sont donc notamment:
En termes de procédé et qualité conférée à la plaque :
   - un temps d'hydratation pratiquement identique pour toutes les plaques à l'entrée du séchoir;
   - suppression de l'écart entre plaques à l'entrée du séchoir;
   - suppression de la calcination de bout de plaque;
   - possibilité de multiplier le nombre de sections de séchage pour se rapprocher du profil de séchage idéal;
   - possibilité d'intégrer une zone de refroidissement dans le dispositif;
   - possibilité de récupérer facilement la chaleur latente de condensation dans le dernier séchoir;
   - flexibilité de choix de procédé de séchage (direct ou indirect ou les 2 combinés) en fonction du coût de l'énergie;
   - possibilité de manutentionner les plaques humides à des échéances plus courtes que dans les lignes classiques;
   - il n'y a plus de casse ou détérioration de plaque par manipulation rapide ou brutale ou par des chocs sur des butées.
En termes d'investissement:
   - réduction du coût du transfert humide et partiellement du transfert sec qui sont intégrés dans l'équipement;
   - réduction du coût de ligne de formage, car plus courte et/ou avec une cisaille de conception de plus simple;
   - séchoir plus simple (pas de pièce en mouvement), et plus petit;
   - installation flexible en capacité en jouant sur la longueur, le nombre des barillets ou le nombre de branches par barillet; ceci permet de procéder à des extensions de capacité par des investissements réduits et d'installation rapide;
   - Réduction des surfaces de terrain et de bâtiments;
   - L'adjonction du dispositif de récupération de la chaleur latente de condensation de la vapeur d'eau bien moins onéreux qu'avec un séchoir conventionnel (pratiquement intégré dans le principe).
En termes de maintenance:
   - réduction des coûts de maintenance sur les transferts humide et sec;
   - réduction des coûts sur le séchoir, puisque le système de motorisation et d'entraînement peut être à l'extérieur de la partie chaude et humide du séchoir; il y a moins de pièces en mouvement;
   - élimination de l'utilisation de l'air comprimé dans ces équipements.
En termes de coût d'exploitation :
   - réduction de l'énergie de séchage par le système de récupération de la chaleur latente de condensation de la vapeur d'eau;
   - réduction de la consommation d'énergie électrique (la puissance installée pour la motorisation des entraînements est divisée par 3 à 4);
   - réduction de la consommation d'air comprimé (sur les tables de transfert) et la maintenance associée;
   - réduction de coût du séchage par l'utilisation de combustible moins cher, dans le cas du séchage indirect;
   - amélioration des taux d'utilisation des équipements.
En termes de sécurité et condition de travail :
   - réduction du bruit en particulier sur les 2 transferts et par la suppression de la cascade à la sortie séchoir. Plus de bruit lié à l'utilisation de l'air comprimé sur les tables de transfert;
   - Sécurité: moins de pièces en mouvement rapide soit de rotation (rouleaux) soit en translation (table monte et baisse).

Il convient de noter que l'invention s'applique de façon générique aux plaques individuelles ainsi qu'aux trains de plaques. Les termes formage, cisaillement, hydratation, séchage, etc. "de la plaque" visent aussi bien entendu "des plaques du train de plaques".

Il convient aussi de noter que le terme de "plaque de plâtre" utilisé dans l'invention couvre les plaques à base de plâtre, et notamment mais non limitativement les plaques avec un ou plusieurs parements en papier ou carton (dénommées en anglais "wall-board", "plaster-board"), mais aussi en d'autres matières telles que un mat de fibres de verre (les plaques dites "feu"), les plaques fibrées (dénommées en anglais "fiber-board), etc.. L'invention s'applique de préférence aux plaques avec parement en carton ("plaster-board").

## Revendications

1. Procédé de fabrication de plaques de plâtre comprenant les étapes suivantes:
(i) formage des plaques;
(ii) durcissement par hydratation des plaques jusqu'à obtention d'un produit hydraté à une teneur inférieure à 80% dans une zone linéaire de durcissement hydratation partielle;
(iii) poursuite de l'hydratation dans au moins un barillet tournant, comprenant un axe central autour duquel est disposée une pluralité de branches, (10a, 10b, 10c, 10d) par rotation des plaques manipulées par les branches autour de l'axe central (9); et
(iv) séchage.

2. Procédé selon la revendication 1, dans lequel l'hydratation est poursuivie dans ledit au moins un barillet jusqu'à la totalité.

3. Procédé selon la revendication 1, dans lequel l'hydratation est poursuivie dans ledit au moins un barillet partiellement encore, et jusqu'à la totalité dans un second barillet.

4. Procédé selon l'une des revendications 1 à 3, comprenant, entre les étapes (ii) et (iii), un étape intermédiaire de cisaillement.

5. Procédé selon la revendication 4, dans lequel cette étape de cisaillement est mise en oeuvre selon le principe du fil.

6. Procédé selon l'une des revendications 1 à 5, dans lequel l'hydratation à l'issue de l'étape (ii) est inférieure à 66%.

7. Procédé selon la revendication 6, dans lequel l'hydratation à l'issue de l'étape (ii) est comprise entre 33 et 66%, de préférence entre 33 et 50%.

8. Dispositif de fabrication de plaques de plâtre comprenant une zone linéaire de durcissement-hydratation partielle jusqu'à obtention d'un produit hydraté à une teneur inférieure à 80 % et au moins un barillet tournant, comprenant un axe central 9 autour duquel est disposée une pluralité de branches (10a, 10b, 10c, 10d), adapté à une poursuite de l'hydratation des plaques.

9. Dispositif selon la revendication 8, dans lequel dans le barillet chaque branche est divisée en une pluralité de bras (11a, 11b, 11c, 11d, 1a) surface occupée par les bras représentant de 50 à 99% de la surface de la branche correspondante.

10. Dispositif selon la revendication 8 ou 9, dans lequel le barillet comprend de 10 à 150, de préférence de 40 à 120, branches.

11. Dispositif selon l'une des revendications 8 à 10, dans lequel la zone durcissement-hydratation et le barillet sont selon deux axes parallèles.

12. Dispositif selon l'une des revendications 8 à 11, dans lequel la zone durcissement et le barillet sont accouplés par l'intermédiaire de rouleaux (8a, 8b et 8c), ces rouleaux interpénétrant les branches (10a, 10b, 10c, 10d).

13. Dispositif selon l'une des revendications 8 à 12, comprenant un dispositif de cisaillement comprenant un fil.

## Claims

1. Method for manufacturing sheets of plasterboard comprising the following steps:
(i) forming the sheets;
(ii) setting the sheets by hydration until a hydrated product with a content of below 80% is obtained in a linear zone for partial hydration-setting;
(iii) continuing hydration in at least one revolving barrel comprising a central axis about which a number of branches (10a, 10b, 10c, 10d) are arranged, by rotation of the sheets handled by the branches about the central axis (9); and
(iv) drying.

2. Method according to Claim 1, in which hydration is continued in the said at least one barrel until full hydration is reached.

3. Method according to Claim 1, in which hydration is continued in the said at least one barrel still to a partial extent, and then in a second barrel until full hydration is reached.

4. Method according to one of Claims 1 to 3, comprising, between steps (ii) and (iii), an intermediate shearing step.

5. Method according to Claim 4, in which this shearing step is carried out using the wire technique.

6. Method according to one of Claims 1 to 5, in which hydration at the end of step (ii) is below 66%.

7. Method according to Claim 6, in which hydration at the end of step (ii) is between 33 and 66%, preferably between 33 and 50%.

8. Device for manufacturing sheets of plasterboard comprising a linear zone for partial hydration-setting until a hydrated product with a content of below 80% is obtained and at least one revolving barrel comprising a central axis (9) about which a number of branches (10a, 10b, 10c, 10d) are arranged, adapted for continuing hydration of the sheets.

9. Device according to Claim 8, in which, in the barrel, each branch is divided into a number of arms (11a, 11b, 11c, 11d), the area occupied by the arms representing from 50 to 99% of the area of the corresponding branch.

10. Device according to Claim 8 or 9, in which the barrel comprises from 10 to 150, preferably from 40 to 120, branches.

11. Device according to one of Claims 8 to 10, in which the hydration-setting zone and the barrel are along two parallel axes.

12. Device according to one of Claims 8 to 11, in which the setting zone and the barrel are coupled via rollers (8a, 8b and 8c), these rollers penetrating between the branches (10a, 10b, 10c, 10d).

13. Device according to one of Claims 8 to 12, comprising a shearing device comprising a wire.

## Patentansprüche

1. Verfahren zur Herstellung von Gipsplatten, umfassend die folgenden Schritte:
(i) Ausbilden der Platten;
(i i) Härtung der Platten durch Hydratisierung bis zum Erhalt eines hydratisierten Produkts mit einem Gehalt von weniger als 80% in einem linearen Bereich für eine partielle Hydratisierungshärtung;
(iii) dann die Hydratisierung in wenigstens einem Drehzylinder, welcher eine Mittelachse umfasst, um welche herum eine Vielzahl von Bereichen (10a, 10b, 10c, 10d) angeordnet ist, durch Drehung der Platten, welche von den Abschnitten um die Mittelachse (9) herum bewegt werden; und
(iv) Trockung.

2. Verfahren nach Anspruch 1, wobei die Hydratisierung in dem wenigstens einen Zylinder bis zur Vollständigkeit fortgesetzt wird.

3. Verfahren nach Anspruch 1, wobei die Hydratisierung in dem wenigstens einen Zylinder nochmals partiell und in einem zweiten Zylinder bis zur Vollständigkeit fortgesetzt wird.

4. Verfahren nach einem der Ansprüche 1-3, umfassend zwischen den Schritten (ii) und (iii) einen Scherzwischenschritt.

5. Verfahren nach Anspruch 4, wobei dieser Scherschritt gemäß dem Drahtprinzip durchgeführt wird.

6. Verfahren nach einem der Ansprüche 1-5, wobei die Hydratisierung am Ausgang des Schrittes (ii) geringer als 66% beträgt.

7. Verfahren nach Anspruch 6, wobei die Hydratisierung am Ausgang des Schritts (ii) zwischen 33 und 66%, vorzugsweise zwischen 33 und 50%, enthalten ist.

8. Vorrichtung zur Herstellung von Gipsplatten, umfassend einen linearen Bereich für eine partielle Hydratisierungshärtung bis zum Erhalt eines Produkts, welches bis zu einem Gehalt von weniger als 80% hydratisiert ist, und wenigstens einen Drehzylinder, welcher eine Mittelachse (9) umfasst, um welche einen Vielzahl von Abschnitten (10a, 10b, 10c, 10d) angeordnet ist, und welcher für eine Fortsetzung der Hydratisierung der Platten ausgestaltet ist.

9. Vorrichtung nach Anspruch 8, wobei in dem Zylinder jeder Abschnitt in eine Vielzahl von Armen (11a, 11b, 11c, 11d, 1 a) unterteilt ist, wobei die durch die Arme eingenommene Fläche 50 bis 99% der Fläche des entsprechenden Abschnitts entspricht.

10. Vorrichtung nach Anspruch 8 oder 9, wobei der Zylinder 10 bis 150, vorzugsweise 40 bis 120, Abschnitte umfasst.

11. Vorrichtung nach einem der Ansprüche 8-10, wobei der Bereich zur Hydratisierungshärtung und der Zylinder entlang zweier paralleler Achsen sind.

12. Vorrichtung nach einem der Ansprüche 8-11, wobei der Bereich zur Härtung und der Zylinder durch Rollen (8a, 8b und 8c) gekoppelt sind, wobei diese Rollen die Abschnitte (10a, 10b, 10c, 10d) durchdringen.

13. Vorrichtung nach einem der Ansprüche 8-12, umfassend eine Schervorrichtung, welche einen Draht umfasst.
